Europäisches Patentamt

European Patent Office

Office européen des brevets

(19)

(11) Publication number: **0 010 076**
**A1**

(12) # EUROPEAN PATENT APPLICATION

(21) Application number: **79850086.4**

(22) Date of filing: **19.09.79**

(51) Int. Cl.³: **A 01 B 49/02**

(30) Priority: **28.09.78 NO 783292**

(43) Date of publication of application:
**16.04.80 Bulletin 80/8**

(84) Designated Contracting States:
**AT BE CH DE FR GB IT LU NL SE**

(71) Applicant: **GLOBUS MASKINFABRIKK A/S**

**2380 Brumunddal(NO)**

(72) Inventor: **Witse, Bjorn**
**Hagaveien 2**
**2380 Brumunddal(NO)**

(74) Representative: **Delmar, John-Ake**
**Östermalmsgatan 45**
**S-114 26 Stockholm(SE)**

(54) Improvement on a farming implement.

(57) An improvement on a farming implement, comprising the combination of a float (1), A S-tine harrow and a ribbed roller (17). The frame (7) of the S-tine harrow is rigidly attached to the float frame (2), and the ribbed roller (17) is attached to the rearward end of an arm (15), whose forward end is attached so as to be pivotable in a vertical plane to the rear portion of the harrow frame (7). The arm (15) for the ribbed roller (17) is biased downwardly by means of a compression spring (19) which is provided between the harrow frame (7) and the arm (15). The mounting of the spring (19) is adjustable for obtaining the desired height and pressure against the ground for the ribbed roller (17).

EP 0 010 076 A1

./...

The present invention pertains to an improvement on a farming implement comprising a combination of a float, an S-tine harrow and a ribbed roller.

After plowing, the ground must be worked such that the sowing field will be as even as possible, with as few clods as possible. The most common method is to work the ground in several operations, first driving over the newly-plowed earth with a float, then with a harrow, and possibly following with a ribbed roller.

Combination implements are known, however, consisting of a float, harrow and ribbed roller, where these implements, as one unit, are drawn behind a tractor.

In the previously known implements of this type, the harrow frame has been hinged to the float frame, and the ribbed roller has been rigidly fastened to the rear end of the harrow frame, for example, by means of an arm.

The object of the present invention is to simplify and improve the above combination implement. This is obtained according to the invention in that the frame for the S-tine harrow is rigidly attached to the float frame, that the ribbed roller is attached to the rearward end of an arm whose forward end is attached so as to be pivotable in the vertical plane to the rear of the harrow frame, and that the arm for the roller drum is loaded in the downward direction by means of a compressed spring arranged between the harrow frame and the arm.

A practical embodiment is characterized in that the fastening of the spring is adjustable, permitting one to regulate the desired height and pressure against the ground of the ribbed roller. A suitable spring for the purpose is a curved blade spring.

A further development of the invention is characterized

- 5 -

in that blades or knives are arranged on the undersides of the float beams, said blades or knives extending obliquely in relation to the working direction of the float.

A further feature of the invention is that the S-tines on the harrow, in a manner known per se, are arranged in transverse rows; each row is suspended in a two-armed lever which is rotatably supported on the frame, and all of the arms are connected to a common adjustment member.

The implement of the invention is very simple in construction, and is therefore inexpensive to produce. Owing to the rigid coupling between the float frame and harrow frame, the special height-adjusting means for the S-tines and the springloaded ribbed roller, one will have full control over the working depth of all of the tool combinations. In addition, the special suspension of the S-tines on the harrow permits a practically linear adjustment of the tines, as opposed to previous embodiments in which the tines, as they moved, described a relatively small circle such that the angle of engagement of the teeth changed as the harrow moved along.

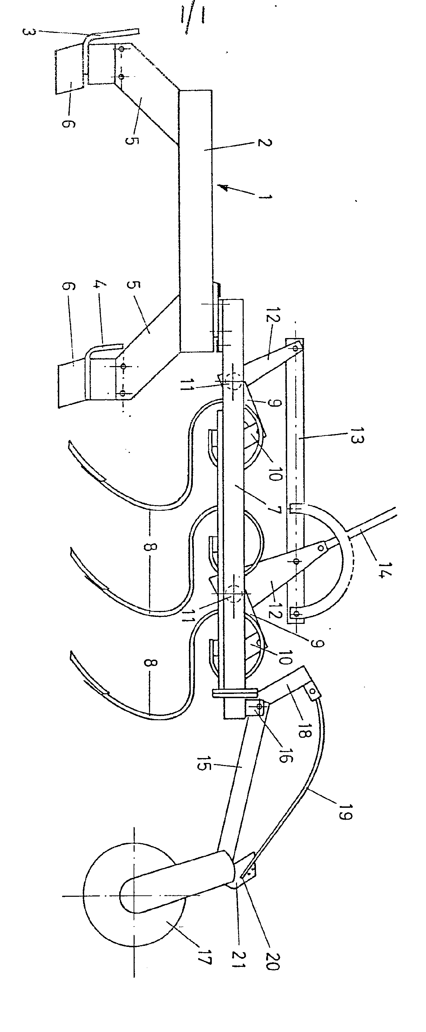

The invention will be explained in greater detail in the following with reference to the drawing, which shows one embodiment of the farming implement of the invention, seen from the side.

The combination implement consists of a float 1 with a frame 2 and transverse float beams 3 and 4 which are attached to the frame by means of arms 5. The beams 3 and 4, in the embodiment example illustrated herein, are angle beams of steel. Attached to the lower edges of the beams 3 and 4 are knives or blades 6. These consist of steel plates which are mounted at a slight angle in relation to the working direction of the implement. These knives or blades, therefore, will cut up the mounds of earth turned over by the plow and the beams 3 and 4 will level out the ground. Rigidly attached to the rearward end of the float frame 2 is a harrow frame 7 which supports three rows of S-teeth 8. Each row could for example consist of six teeth which are attached to a common transverse support. A lever 9 is attached to the transverse support via a coupling plate 10. The lever arm 9 is rotatably fastened to the frame 7. This rotatable connection can consist of a pipe 11 extending along a transverse shaft. Another arm 12 is attached to the pipe 11, the arm 12 being rotatably attached to a common adjustment rod 13 which can be moved by means of a handle 14. Owing to the relatively great length of the arm 9, the S-teeth 8 will obtain an approximately linear movement up and down.

Attached to the rearward end of the harrow frame 7 are arms 15, pivotable in a vertical plane in lugs 16. A ribbed roller 17 is attached to the rearward, free end of the arms 15. Also attached to the rear end of the harrow frame 7 are rigidly fastened, upwardly projecting arms 18, which form a fastener for one end of a curved blade spring 19 whose other end is fastened to the outer end of the frame 15. The fastening of the rearward end of the spring 19 is adjustable, because the spring can be fastened in one of several holes 20 in an adjustment plate 21 which is attached to the arm 15. By means of this adjustment, the pressure on the ribbed roller can be regulated, and the height of the roller will also determine the working depth of the S-teeth 8.

The implement of the invention can with advantage be produced as a module of a specified width and arranged such that several such modules can be combined to the desired width.

The implement can be drawn by a pulling vehicle such as a tractor, for example (not shown here), being attached to the vehicle by means of chains fastened both to the pulling arms and to the top stay, such that when the implement is in use it will be drawn easily and freely behind the tractor, but when being transported can be lifted off the ground by means of this three-point suspension.

0010076

Patent Claims

1.      An improvement on a farming implement, comprising the combination of a float, an S-tine harrow and a ribbed roller, characterized in that the frame (7) for the S-tine harrow is rigidly attached to the float frame (2), that the ribbed roller is attached to the rearward end of an arm (15) whose forward end is attached so as to be pivotable in a vertical plane to the rear portion of the harrow frame (7), and that the arm (15) for the ribbed roller (17) is loaded in a downward direction by means of a compressed spring (19) which is provided between the harrow frame (7) and the arm (15).

2.      An improved farming implement according to claim 1, characterized in that the fastening for the spring (19) is adjustable for obtaining the desired height and pressure against the ground for the roller.

3.      An improved farming implement according to claims 1 and 2, characterized in that the spring is a curved blade spring (19).

4.      An improved farming implement according to one or more of the preceding claims, characterized in that blades or knives (6) are arranged on the underside of the float beams (3, 4), extending obliquely in relation to the direction of work.

5.      An improved farming implement according to one or more of the preceding claims, where the S-teeth on the harrow are arranged in transverse rows, characterized in that each row is suspended from a lever which is rotatably supported on the frame, and that all of the lever arms are connected to a common adjustment member (13).

0010076
Application number

# European Patent Office
# EUROPEAN SEARCH REPORT
EP 79 850 086.4

## DOCUMENTS CONSIDERED TO BE RELEVANT

| Category | Citation of document with indication, where appropriate, of relevant passages | Relevant to claim |
|---|---|---|
| | DE - U - 7 111 450 (F. FRANZ)<br>* page 5, lines 11 to 17; fig. 1 *<br>-- | 1,4,5 |
| | DE - U - 1 985 437 (VENTZKI GMBH)<br>* fig. 1 *<br>-- | 1 |
| | US - A - 2 000 097 (A.W. REYNOLDS)<br>* fig. 3, 6 *<br>----- | 5 |

### CLASSIFICATION OF THE APPLICATION (Int. Cl.³)

A 01 B 49/02

### TECHNICAL FIELDS SEARCHED (Int. Cl.³)

A 01 B 19/00
A 01 B 23/00
A 01 B 25/00
A 01 B 31/00
A 01 B 49/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X | The present search report has been drawn up for all claims

| Place of search | Date of completion of the search | Examiner |
|---|---|---|
| Berlin | 21-12-1979 | SCHOFER |

EPO Form 1503.1  05.78